# EUROPÄISCHE PATENTANMELDUNG

(11) **EP 1 049 311 A2**
(43) Veröffentlichungstag der Anmeldung: **02.11.2000**
(21) Anmeldenummer: 00107522.5
(22) Anmeldetag: 07.04.2000
(51) Int. Cl.: H04M 1/725

(54) **Telekommunikationsendgerät**

(30) Priorität: 30.04.1999 DE 19919683
(71) Anmelder: ROBERT BOSCH GMBH, 70442 Stuttgart (DE)
(72) Erfinder: Wagner, Thomas, 70192 Stuttgart (DE)

(57) **Zusammenfassung**

Es wird ein Telekommunikationsendgerät (1), insbesondere ein Mobilfunkgerät, vorgeschlagen, das einen Betriebsmodus für eine automatische Notrufabsetzung vorsieht. Das Telekommunikationsendgerät (1) umfaßt eine Sendevorrichtung (5), eine Eingabevorrichtung (10), insbesondere eine Tastatur, und eine Wiedergabevorrichtung (15), insbesondere einen Lautsprecher und/oder eine Anzeigevorrichtung. Bei dem Betriebsmodus für die automatische Notrufabsetzung erfolgt zu vorgegebenen Zeiten an der Wiedergabevorrichtung (15) eine Signalisierung. Die Sendevorrichtung (5) gibt ein Signal ab, wenn nicht innerhalb einer ersten Zeit vom Beginn der jeweiligen Signalisierung an eine Quittierung an der Eingabevorrichtung (10) erfolgt. Im Fall einer innerhalb der ersten Zeit erfolgenden Quittierung bricht die jeweilige Signalisierung ab. Nach einer zweiten Zeit von der Quittierung an erfolgt erneut eine Signalisierung an der Wiedergabevorrichtung (15).

## Beschreibung

### Stand der Technik

Die Erfindung geht von einem Telekommunikationsendgerät nach der Gattung des Hauptanspruchs aus.

Es sind bereits als Mobilfunkgerät ausgebildete Telekommunikationsendgeräte bekannt, die eine Sendevorrichtung, eine als Tastatur ausgebildete Eingabevorrichtung und eine Wiedergabevorrichtung mit einem Lautsprecher in einer Hörkapsel und einem Display als Anzeigevorrichtung umfassen.

### Vorteile der Erfindung

Das erfindungsgemäße Telekommunikationsendgerät mit den Merkmalen des Hauptanspruchs hat demgegenüber den Vorteil, daß ein Betriebsmodus vorgesehen ist, bei dem zu vorgegebenen Zeiten an der Wiedergabevorrichtung eine Signalisierung erfolgt, daß die Sendevorrichtung ein Signal abgibt, wenn nicht innerhalb einer ersten Zeit von Beginn der jeweiligen Signalisierung an eine Quittierung an der Eingabevorrichtung erfolgt, und daß im Fall einer innerhalb der ersten Zeit erfolgenden Quittierung die jeweilige Signalisierung abbricht und nach einer zweiten Zeit von der Quittierung an erneut eine Signalisierung an der Wiedergabevorrichtung erfolgt. Auf diese Weise kann ein herkömmliches Telekommunikationsendgerät als Notfallmelder verwendet werden, wobei ein Notruf automatisch abgesetzt wird, wenn der Benutzer die Signalisierung nicht rechtzeitig quittiert. Ein Notruf kann somit auch dann abgesetzt werden, wenn er vom Benutzer nicht mehr selbst initiiert werden kann. Ein solchermaßen in seiner Funktion erweitertes erfindungsgemäßes Telekommunikationsendgerät kann besonders bei Ausbildung als Mobilfunkgerät zur Überwachung von Wach- und Kontrollpersonal auf Streifengang eingesetzt werden. Ein solches Mobilfunkgerät kann als Notfallmelder beispielsweise auch von Extremsportlern wie Bergsteigern, von Spaziergängern in einsamen Gegenden, von regelmäßig medizinisch zu versorgenden Personen, und so weiter eingesetzt werden. Durch die in den Unteransprüchen aufgeführten Maßnahmen sind vorteilhafte Weiterbildungen und Verbesserungen des im Hauptanspruch angegebenen Telekommunikationsendgerätes möglich.

Besonders vorteilhaft ist es, daß ein Speicher vorgesehen ist, daß im Speicher mindestens eine erste Rufnummer abgelegt ist, daß zur Abgabe des Signals eine Anwahl der ersten Rufnummer erfolgt und daß bei erfolgreichem Verbindungsaufbau das Signal an einen Teilnehmer eines Telekommunikationsnetzes abgegeben wird, dem die erste Rufnummer zugeordnet ist. Auf diese Weise kann im Notfall automatisch und gezielt Hilfe angefordert werden. Die Rufnummer kann dabei vorteilhafterweise so gewählt sein, daß der zugeordnete Teilnehmer im Falle eines Notfalls die geeigneten Hilfsmaßnahmen einleiten kann.

Ein weiterer Vorteil besteht darin, daß mehrere Rufnummern im Speicher abgelegt sind, daß für den Fall, in dem eine Verbindung zu einem Teilnehmer mit einer im Speicher abgelegten Rufnummer nicht innerhalb einer dritten Zeit zustande kommt oder ein Belegt-Zustand vorliegt, eine Anwahl einer weiteren im Speicher abgelegten Rufnummer erfolgt und daß bei erfolgreichem Verbindungsaufbau das Signal an einen Teilnehmer des Telekommunikationsnetzes abgegeben wird, dem die weitere Rufnummer zugeordnet ist. Auf diese Weise wird die Wahrscheinlichkeit für einen erfolgreichen Verbindungsaufbau im Notfall erhöht.

Ein weiterer Vorteil besteht darin, daß zumindest eine im Speicher ablegbare Rufnummer an der Eingabevorrichtung vorgebbar ist. Auf diese Weise kann der Benutzer nach seinen Bedürfnissen einen Teilnehmer vorgeben, der im Notfall geeignete Hilfsmaßnahmen einleiten soll.

Ein weiterer Vorteil besteht darin, daß zumindest eine Rufnummer, vorzugsweise eine Notrufnummer, fest im Speicher abgelegt ist. Auf diese Weise wird gewährleistet, daß im Notfall eine zur Abhilfe des Notfalls kompetente Stelle vom Telekommunikationsendgerät angerufen werden kann.

Ein weiterer Vorteil besteht darin, daß die Sendevorrichtung eine Sendeantenne umfaßt und das Signal in einer vorgegebenen Frequenzlage abstrahlt. Auf diese Weise kann unabhängig von einer Telekommunikationsverbindung ein Signal, insbesondere ein Notrufsignal, abgestrahlt und in der Umgebung des Telekommunikationsendgerätes mit geeigneten Empfängern geortet werden, beispielsweise im Lawinenrettungsdienst.

Ein weiterer Vorteil besteht darin, daß die Sendevorrichtung das Signal wiederholt abstrahlt. Somit wird die Wahrscheinlichkeit erhöht, mit der das Signal von geeigneten Empfängern in der Umgebung des Telekommunikationsendgerätes empfangen werden kann.

Ein weiterer Vorteil besteht darin, daß die vorgegebene Frequenzlage eine Frequenzlage für Notrufsignale ist. Auf diese Weise wird gewährleistet, daß spezielle Notrufempfänger, beispielsweise im Lawinenrettungsdienst, die für den Empfang von Notrufsignalen in dieser Frequenzlage ausgerichtet sind, das Telekommunikationsendgerät orten können.

In vorteilhafter Weise können die Zeitabstände zwischen den einzelnen Signalisierungen und/oder das Zeitkriterium für die Quittierung einer Signalisierung und/oder das Zeitkriterium für den Abbruch eines Verbindungsaufbaus und die Anwahl einer weiteren Rufnummer und/oder das Zeitkriterium für das Abstrahlen von Signalen mittels der Sendeantenne, wenn keine Telekommunikationsverbindung hergestellt werden kann, an der Eingabevorrichtung nach den Bedürfnissen des Benutzers vorgegeben werden.

### Zeichnung

Ein Ausführungsbeispiel der Erfindung ist in der Zeichnung dargestellt und in der nachfolgenden Beschreibung näher erläutert. Es zeigen Figur 1 ein Blockschaltbild eines erfindungsgemäßen Telekommunikationsendgerätes, Figur 2 einen ersten Ablaufplan für die Funktionsweise einer Auswerteeinheit des erfindungsgemäßen Telekommunikationsendgerätes und Figur 3 einen zweiten Ablaufplan für die Funktionsweise der Auswerteeinheit des erfindungsgemäßen Telekommunikationsendgerätes.

### Beschreibung des Ausführungsbeispiels

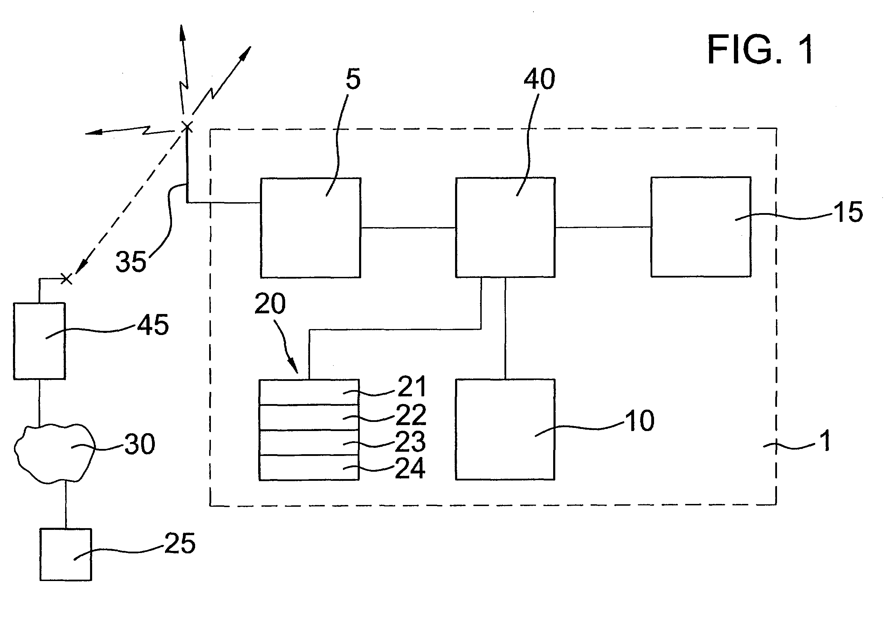

In Figur 1 kennzeichnet 1 ein als Mobilfunkgerät ausgebildetes Telekommunikationsendgerät. Das Mobilfunkgerät 1 umfaßt eine Auswerteeinheit 40, an die eine Sendevorrichtung 5, eine Eingabevorrichtung 10, eine Wiedergabevorrichtung 15 und ein Speicher 20 angeschlossen sind. Die Sendevorrichtung 5 ist mit einer Sendeantenne 35 verbunden. Die Eingabevorrichtung 10 ist als insbesondere alphanumerische Tastatur ausgebildet. Die Wiedergabevorrichtung 15 kann akustisch und/oder optisch ausgebildet sein. Bei akustischer Ausbildung der Wiedergabevorrichtung 15 kann ein Lautsprecher vorgesehen sein, der beispielsweise in einer Hörkapsel des Mobilfunkgerätes 1 angeordnet sein kann. Die akustische Wiedergabe kann jedoch auch durch einen separaten Lautsprecher außerhalb der Hörkapsel des Mobilfunkgerätes 1 realisiert sein. Eine optische Wiedergabe kann durch eine Anzeigevorrichtung, beispielsweise ein Display oder eine oder mehrere Leuchtdioden realisiert sein. Zusätzlich oder alternativ kann die Wiedergabevorrichtung 15 ein Vibrationselement zur Signalisierung umfassen. Der Speicher 20 umfaßt mindestens einen ersten Speicherplatz 21 zur Speicherung einer ersten Rufnummer. Im beschriebenen Ausführungsbeispiel umfaßt der Speicher 20 zusätzlich einen zweiten Speicherplatz 22 zur Speicherung einer zweiten Rufnummer, einen dritten Speicherplatz 23 zur Speicherung einer dritten Rufnummer und einen vierten Speicherplatz 24 zur Speicherung einer vierten Rufnummer. In Figur 1 sind nur die Teile des Mobilfunkgerätes 1 beschrieben, die für die Beschreibung der Erfindung notwendig sind. Weitere Bauteile des Mobilfunkgerätes 1, wie beispielsweise Empfangsbausteine sind in Figur 1 nicht dargestellt. Die Sendevorrichtung 5 kann auch Teil einer Sende- /Empfangsvorrichtung sein und die Sendeantenne 35 kann gleichzeitig Empfangsantenne sein. Bei dem Mobilfunkgerät 1 handelt es sich um ein herkömmliches Mobilfunkgerät, das um einen Betriebsmodus für automatische Notrufabsetzung erweitert ist, bei dem zu vorgegebenen Zeiten an der Wiedergabevorrichtung 15 eine Signalisierung erfolgt. Der Betriebsmodus für automatische Notrufabsetzung kann vom Benutzer an der Eingabevorrichtung 10 ein- und auch wieder ausgeschaltet werden. Sobald der Betriebsmodus für automatische Notrufabsetzung an der Eingabevorrichtung 10 eingestellt wurde, beginnt eine zweite Zeit zu laufen. Nach Ablauf dieser zweiten Zeit erfolgt eine Signalisierung an der Wiedergabevorrichtung 15, die je nach beschriebener Ausbildung der Wiedergabevorrichtung 15 akustisch und/oder optisch und/oder durch Vibration erfolgen kann. Wenn der Benutzer nicht innerhalb einer ersten Zeit vom Beginn der jeweiligen Signalisierung an eine Quittierung an der Eingabevorrichtung 10 vornimmt, so gibt die Sendevorrichtung 5 über die Sendeantenne 35 ein Signal ab. Für den Fall, daß der Benutzer innerhalb der ersten Zeit vom Beginn der jeweiligen Signalisierung an eine Quittierung an der Eingabevorrichtung 10 vornimmt, bricht die Signalisierung an der Wiedergabevorrichtung 15 ab und die zweite Zeit beginnt erneut zu laufen. Nach Ablauf der zweiten Zeit erfolgt wiederum eine Signalisierung an der Wiedergabevorrichtung 15, wobei in der beschriebenen Weise eine rechtzeitige Quittierung innerhalb der ersten Zeit vom Beginn der jeweiligen Signalisierung an geprüft wird und bei Ausbleiben einer solchen rechtzeitigen Quittierung ein Signal von der Sendevorrichtung 5 über die Sendeantenne 35 abgestrahlt wird. Bei rechtzeitiger Quittierung fängt wieder die zweite Zeit von der Quittierung an zu laufen, nach deren Ablauf eine erneute Signalisierung an der Wiedergabevorrichtung 15 erfolgt, und so weiter.

Für den Fall, daß keine rechtzeitige Quittierung der Signalisierung erfolgt, wird ein Signal über die Sendevorrichtung 5 über die Sendeantenne 35 abgestrahlt. Die Signalisierung an der Wiedergabevorrichtung 15 kann dabei abgeschaltet werden, ohne daß die zweite Zeit erneut zu laufen beginnt. Für die Abgabe des Signals von der Sendevorrichtung 5 gibt es mehrere Möglichkeiten. Zum einen kann die Auswerteeinheit 40 die erste Rufnummer aus dem ersten Speicherplatz 21 auslesen und deren Anwahl veranlassen. Über eine Basisstation 45, in deren Funkzelle sich das Mobilfunkgerät 1 befindet, wird dann ein Verbindungsaufbau über ein an die Basisstation 45 angeschlossenes Telekommunikationsnetz 30 zu einem ebenfalls mit dem Telekommunikationsnetz 30 verbundenen Teilnehmer 25, der der ersten Rufnummer zugeordnet ist, eingeleitet. Bei erfolgreichem Verbindungsaufbau wird dann von der Sendevorrichtung 5 über die Sendeantenne 35 das Signal an die Basisstation 45 abgestrahlt und über das Telekommunikationsnetz 30 an den Teilnehmer 25 weitergeleitet. Der Teilnehmer 25 kann in einer alternativen Ausführungsform auch drahtlos über das Telekommunikationsnetz 30 erreicht werden. Für den Fall, daß beim Teilnehmer 25 ein Belegt-Zustand vorliegt oder eine Verbindung zum Teilnehmer 25 mit der im ersten Speicherplatz 21 abgelegten ersten Rufnummer nicht innerhalb einer dritten Zeit vom Einleiten des Verbindungsaufbaus an zustande kommt, veranlaßt die Auswerteeinheit 40 den Abbruch des Verbindungsaufbaus und liest die zweite Rufnummer aus dem zweiten Speicherplatz 22 aus. Anschließend erfolgt die Anwahl der zweiten Rufnummer. Bei erfolgreichem Verbindungsaufbau zu einem der zweiten Rufnummer zugeordneten Teilnehmer des Telekommunikationsnetzes 30, der in Figur 1 nicht dargestellt ist, wird das Signal von der Sendevorrichtung 5 an diesen Teilnehmer vom Mobilfunkgerät 1 über die Basisstation 45 und das Telekommunikationsnetz 30 übertragen. Kommt innerhalb der dritten Zeit nach Einleiten des Verbindungsaufbaus zu dem der zweiten Rufnummer zugeordneten Teilnehmer ebenfalls keine Verbindung zustande oder liegt bei diesem Teilnehmer ein Belegt-Zustand vor, so bricht die Auswerteeinheit 40 den Verbindungsaufbau ab und liest die dritte Rufnummer aus dem dritten Speicherplatz 23 zur Anwahl eines der dritten Rufnummer zugeordneten Teilnehmers des Telekommunikationsnetzes 30 aus. Kommt es auch hier nicht in der beschriebenen Weise zu einer Verbindung, so wird der Verbindungsaufbau abgebrochen und die Rufnummer des vierten Speicherplatzes 24 entsprechend angewählt. Kommt es auch hierbei nicht in der beschriebenen Weise zu einem Verbindungsaufbau, so wird der Vorgang zyklisch wiederholt und wieder die erste Rufnummer des ersten Speicherplatzes 21 angewählt, und so weiter. Der Vorgang kann so lange wiederholt werden, bis eine Verbindung über das Telekommunikationsnetz 30 zu einem Teilnehmer, der einer der im Speicher 20 abgelegten Rufnummern zugeordnet ist, erfolgreich zustande kommt und das Signal von der Sendevorrichtung 5 über die Basisstation 45 das Telekommunikationsnetz 30 an den entsprechenden Teilnehmer übertragen werden kann.

Bei dem von der Sendevorrichtung 5 über die Sendeantenne 35 abgegebenen Signal kann es sich um ein Notrufsignal handeln. Ein Teilnehmer, der ein solches Notrufsignal über das Telekommunikationsnetz 30 empfängt, kann dann entsprechende Hilfsmaßnahmen für den Benutzer des Mobilfunkgerätes 1 einleiten. Dem Signal kann dabei von der Basisstation 45 beispielsweise durch Feldstärkemessung eine ungefähre Standortbestimmung des Mobilfunkgerätes 1 hinzugefügt werden, so daß die vom angewählten Teilnehmer eingeleiteten Hilfsmaßnahmen schneller dem Benutzer des Mobilfunkgerätes 1 zugute kommen. Die Rufnummern, die im Speicher 20 abgelegt sind, können an der Eingabevorrichtung 10 eingegeben und/oder verändert werden. Zur Kontrolle können sie an einer als Display ausgebildeten Anzeigevorrichtung der Wiedergabevorrichtung 15 dargestellt werden. Der Speicher 20 ist daher vorzugsweise als Schreib- /Lesespeicher realisiert. Es kann jedoch vorgesehen sein, daß zumindest einer der Speicherplätze 21, 22, 23, 24 des Speichers 20 als Nur-Lese-Speicher zur Speicherung einer Notruf -Rufnummer, beispielsweise der Polizei oder der Feuerwehr ausgebildet ist und somit nicht an der Eingabevorrichtung 10 geändert werden kann.

Zusätzlich oder alternativ kann es vorgesehen sein, daß das Signal von der Sendevorrichtung 5 über die Sendeantenne 35 nicht an einen Teilnehmer des Telekommunikationsnetzes 30, das heißt nicht in einem für die Kommunikation mit der Basisstation 45 vorgesehenen Funkkanal, sondern in einer weiteren vorgegebenen Frequenzlage abgestrahlt wird. Dies ist durch die blitzförmigen Pfeile in Figur 1 dargestellt. Bei dieser vorgegebenen weiteren Frequenzlage kann es sich um eine Frequenzlage handeln, die speziell für Notrufsignale eingerichtet ist. Diese Frequenzlage wird dabei auch von Empfängern von Notdiensten, beispielsweise von Lawinenrettungsdiensten benutzt, um Verschüttete zu bergen, deren Mobilfunkgerät 1 Notrufsignale in dieser Frequenzlage abstrahlt. Dazu kann die Abstrahlung des Signals beziehungsweise des Notrufsignals wiederholt erfolgen, um die Wahrscheinlichkeit für den Empfang durch ein entsprechendes Empfangsgerät zu erhöhen. Die Sendevorrichtung 5 kann das Signal auch in Form von Funkimpulsen abstrahlen. Auf diese Weise kann Energie eingespart werden, so daß der Notruf für eine längere Zeit von der Sendevorrichtung 5 absetzbar ist.

In einer alternativen Ausführungsform kann es vorgesehen sein, daß gleichzeitig zum Aufbau einer Telekommunikationsverbindung über die Basisstation 45 und das Telekommunikationsnetz 30 zu einem einer Rufnummer des Speichers 20 zugeordneten Teilnehmer für die Absetzung des Signals von der Sendevorrichtung 5 das Signal auch in der vorgegebenen Frequenzlage für Notrufsignale und somit nicht in einem Funkkanal der Basisstation 45 in der beschriebenen Weise abgestrahlt wird, so daß Hilfsmaßnahmen im Falle eines Notrufs nicht nur von einem entfernten Teilnehmer des Telekommunikationsnetzes 30 sondern auch von in der Nähe des Mobilfunkgerätes 1 angeordneten und das Notrufsignal in der vorgegebenen Frequenzlage für Notrufsignale empfangenden Notrufempfängern eingeleitet werden können, so daß gegebenenfalls schneller Hilfe beim Benutzer des Mobilfunkgerätes 1 geleistet werden kann.

In einer weiteren Ausführungsform kann es vorgesehen sein, daß die Sendevorrichtung 5 das Signal in der vorgegebenen Frequenzlage für Notrufsignale nur dann abstrahlt, wenn innerhalb einer vierten vorgegebenen Zeit vom Beginn der jeweiligen nicht rechtzeitig quittierten Signalisierung an keine Telekommunikationsverbindung zu einem Teilnehmer des Telekommunikationsnetzes 30 erfolgreich aufgebaut werden konnte. Die vierte vorgegebene Zeit ist dabei sinnvollerweise größer als die dritte vorgegebene Zeit gewählt, damit es Oberhaupt eine realistische Möglichkeit für einen Verbindungsaufbau zu einem Teilnehmer des Telekommunikationsnetzes 30 kommen kann. Auf diese Weise kann eine Hierarchie in der Auswahl der zur Verfügung stehenden Notrufmaßnahmen realisiert werden, die den Aufbau einer Verbindung zu einem Teilnehmer des Telekommunikationsnetzes 30 priorisiert. Erst wenn diese Maßnahme nicht greift, wird der Notruf auf in der Umgebung des Mobilfunkgerätes 1 befindliche Notrufempfänger konzentriert. Sollte die Verbindung zu einem Teilnehmer des Telekommunikationsnetzes 30 am Belegt-Zustand des Teilnehmers scheitern, so kann auch vorgesehen sein, die vierte vorgegebene Zeit von einem Zeitpunkt an laufen zu lassen, an dem keiner den Rufnummern im Speicher 20 zugeordneten Teilnehmer des Telekommunikationsnetzes 30 mehr im Belegt-Zustand vorliegt. Auf diese Weise wird eine Einschränkung des Notrufs auf in der Umgebung befindliche Notrufempfänger verhindert, wenn die angerufenen Teilnehmer aufgrund des in der Auswerteeinheit 40 detektierten Belegt-Zustandes offensichtlich doch anwesend sind.

Die erste Zeit und/oder die zweite Zeit und/oder die dritte Zeit und/oder die vierte Zeit kann vom Benutzer des Mobilfunkgerätes 1 an der Eingabevorrichtung 10 eingestellt oder verändert und in einem in Figur 1 nicht dargestellten Speicherbereich des Speichers 20 abgelegt werden. Der Speicher 20 ist als nicht-flüchtiger Speicher ausgebildet, so daß die gespeicherten Daten nicht verloren gehen.

Das Telekommunikationsendgerät 1 kann auch schnurgebunden sein, wobei dann die Sendevorrichtung 5 direkt an eine Vermittlungsstelle des Telekommunikationsnetzes 30 über Draht angeschlossen ist. Die Sendeantenne 35 kann zusätzlich an eine solche drahtgebundene Sendevorrichtung 5 angeschlossen sein, um in der beschriebenen Weise Signale oder Notrufsignale in der dafür vorgegebenen Frequenzlage abzustrahlen.

Die Basisstation 45 ist in diesem Fall nicht mehr erforderlich.

In einer weiteren Ausführungsform kann es auch vorgesehen sein, daß das Signal beziehungsweise das Notrufsignal lediglich in der dafür vorgegebenen Frequenzlage von der Sendeantenne 35 abgestrahlt wird, ohne daß ein Verbindungsaufbau zu einem Teilnehmer des Telekommunikationsnetzes 30 versucht wird.

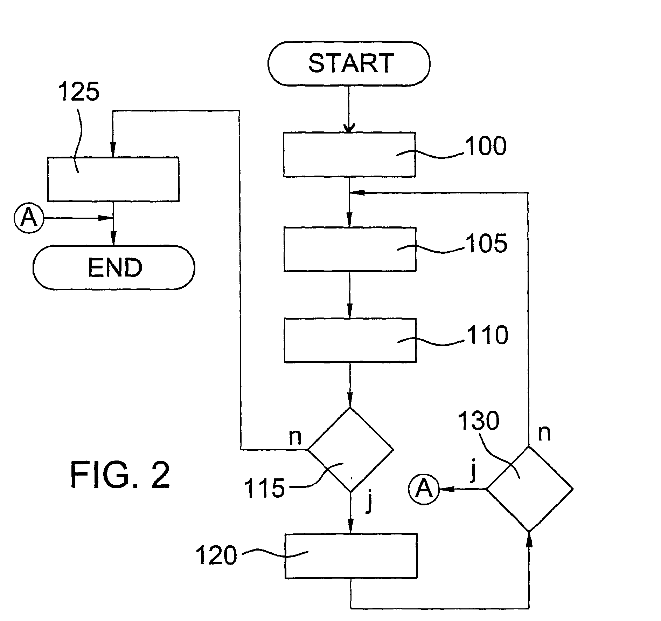

In Figur 2 ist ein Ablaufplan für die Funktionsweise der Auswerteeinheit 40 dargestellt. Bei einem Programmpunkt 100 stellt die Auswerteeinheit 40 fest, daß an der Eingabevorrichtung 10 der beschriebenen Betriebsmodus für eine automatische Notrufabsetzung eingestellt wurde. Anschließend wird zu einem Programmpunkt 105 verzweigt. Bei Programmpunkt 105 startet die Auswerteeinheit 40 ein Zeitglied, dessen Zeitkonstante der zweiten Zeit entspricht. Anschließend wird zu einem Programmpunkt 110 verzweigt. Bei Programmpunkt 110 ist die zweite Zeit abgelaufen und die Auswerteeinheit 40 veranlaßt die Wiedergabevorrichtung 15 zu einer akustischen und/oder optischen Signalisierung und/oder zu einer Signalisierung durch Vibration. Anschließend wird zu einem Programmpunkt 115 verzweigt. Bei Programmpunkt 115 prüft die Auswerteeinheit 40, ob innerhalb der ersten vorgegebenen Zeit nach Beginn der Signalisierung eine Quittierung an der Eingabevorrichtung 10 vorgenommen wurde. Ist dies der Fall, so wird zu einem Programmpunkt 120 verzweigt, andernfalls wird zu einem Programmpunkt 125 verzweigt. Bei Programmpunkt 120 veranlaßt die Auswerteeinheit 40 den Abbruch der Signalisierung an der Wiedergabevorrichtung 15. Anschließend wird zu einem Programmpunkt 130 verzweigt. Bei Programmpunkt 130 prüft die Auswerteeinheit 40, ob der Betriebsmodus für automatische Notrufabsetzung durch entsprechende Eingabe an der Eingabevorrichtung 10 beendet wurde. Ist dies der Fall, so wird das Programm verlassen, andernfalls wird zu Programmpunkt 105 zurückverzweigt. Bei Programmpunkt 125 veranlaßt die Auswerteeinheit 40 die Sendevorrichtung 5 zum Absetzen eines Signals beziehungsweise eines Notrufsignals. Anschließend wird das Programm verlassen.

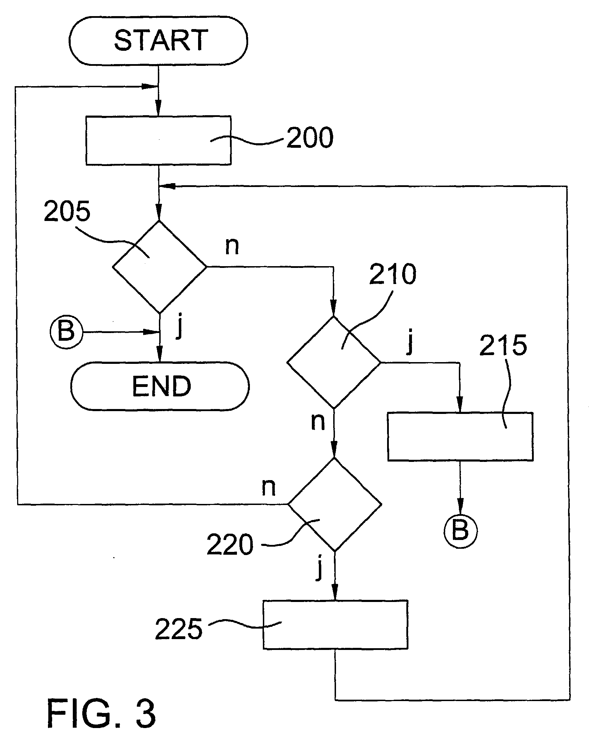

In Figur 3 wird nun ein Ablaufplan für die Funktionsweise der Auswerteeinheit 40 beim Absetzen des Signals beziehungsweise des Notrufsignals von der Sendevorrichtung 5 beschrieben. Dabei handelt es sich um ein Unterprogramm, das bei Programmpunkt 125 aufgerufen wird. Bei einem Programmpunkt 200 veranlaßt die Auswerteeinheit 40 die Anwahl der ersten Rufnummer der ersten Speicherplatzes 21 des Speichers 20. Anschließend wird zu einem Programmpunkt 205 verzweigt. Bei Programmpunkt 205 prüft die Auswerteeinheit 40, ob der zu der aktuell angewählten Rufnummer gehörende Teilnehmer des Telekommunikationsnetzes 30 belegt ist oder ob innerhalb der dritten Zeit vom Beginn des Einleitens des Verbindungsaufbaus an eine Verbindung zu diesem Teilnehmer zustande kommt. Ist dies der Fall, so veranlaßt die Auswerteeinheit 40 die Sendevorrichtung 5 zur Übertragung des Signals beziehungsweise des Notrufsignals über das Telekommunikationsnetz 30 an den Teilnehmer, der der entsprechenden Rufnummer zugeordnet ist, und das Programm wird verlassen. Andernfalls wird zu einem Programmpunkt 210 verzweigt. Bei Programmpunkt 210 prüft die Auswerteeinheit 40, ob die vierte vorgegebene Zeit vom Beginn der Signalisierung an abgelaufen ist und ob der gerade angewählte Teilnehmer nicht im Belegt-Zustand vorliegt. Ist dies der Fall, so wird zu einem Programmpunkt 215 verzweigt, andernfalls wird zu einem Programmpunkt 220 verzweigt. Bei Programmpunkt 215 veranlaßt die Auswerteeinheit 40 die Sendevorrichtung 5 zur Abstrahlung von Signalen beziehungsweise Notrufsignalen über die Sendeantenne 35 in der dafür vorgegebenen Frequenzlage und damit nicht an einen Teilnehmer des Telekommunikationsnetzes 30. Die Signale werden dabei vorzugsweise wiederholt und in Form von Funkimpulsen von der Sendeantenne 35 abgestrahlt. Anschließend wird das Programm verlassen.

Bei Programmpunkt 220 prüft die Auswerteeinheit 40, ob weitere Rufnummern im Speicher 20 vorliegen. Ist dies der Fall, so wird zu einem Programmpunkt 225 verzweigt, andernfalls wird zu Programmpunkt 200 zurückverzweigt. Bei Programmpunkt 225 veranlaßt die Auswerteeinheit 40 die Anwahl einer weiteren im Speicher abgelegten Rufnummer. Anschließend wird zu Programmpunkt 205 verzweigt.

Der Ablaufplan nach Figur 3 entspricht der beschriebenen Ausführungsform der hierarchischen Absetzung eines Notrufs zunächst an einen Teilnehmer des Telekommunikationsnetzes 30 und falls dies nicht möglich ist, an die Umgebung des Telekommunikationsendgerätes 1 in der für die Abstrahlung von Notrufsignalen vorgegebenen Frequenzlage. Das wiederholte Abstrahlen von Notrufsignalen in der für die Notrufsignale vorgegebenen Frequenzlage kann in regelmäßigen Abständen erfolgen.

## Patentansprüche

1. Telekommunikationsendgerät (1), insbesondere Mobilfunkgerät, mit einer Sendevorrichtung (5), einer Eingabevorrichtung (10), insbesondere einer Tastatur, und einer Wiedergabevorrichtung (15), insbesondere einem Lautsprecher und/oder einer Anzeigevorrichtung, dadurch gekennzeichnet, daß ein Betriebsmodus vorgesehen ist, bei dem zu vorgegebenen Zeiten an der Wiedergabevorrichtung (15) eine Signalisierung erfolgt, daß die Sendevorrichtung (5) ein Signal abgibt, wenn nicht innerhalb einer ersten Zeit vom Beginn der jeweiligen Signalisierung an eine Quittierung an der Eingabevorrichtung (10) erfolgt, und daß im Fall einer innerhalb der ersten Zeit erfolgenden Quittierung die jeweilige Signalisierung abbricht und nach einer zweiten Zeit von der Quittierung an erneut eine Signalisierung an der Wiedergabevorrichtung (15) erfolgt.

2. Telekommunikationsendgerät (1) nach Anspruch 1, dadurch gekennzeichnet, daß ein Speicher (20) vorgesehen ist, daß im Speicher (20) mindestens eine erste Rufnummer abgelegt ist, daß zur Abgabe des Signals eine Anwahl der ersten Rufnummer erfolgt und daß bei erfolgreichem Verbindungsaufbau das Signal an einen Teilnehmer (25) eines Telekommunikationsnetzes (30) abgegeben wird, dem die erste Rufnummer zugeordnet ist.

3. Telekommunikationsendgerät (1) nach Anspruch 2, dadurch gekennzeichnet, daß mehrere Rufnummern im Speicher (20) abgelegt sind, daß für den Fall, in dem eine Verbindung zu einem Teilnehmer (25) mit einer im Speicher (20) abgelegten Rufnummer nicht innerhalb einer dritten Zeit zustande kommt oder ein Belegtzustand vorliegt, eine Anwahl einer weiteren im Speicher (20) abgelegten Rufnummer erfolgt und daß bei erfolgreichem Verbindungsaufbau das Signal an einen Teilnehmer (25) des Telekommunikationsnetzes (30) abgegeben wird, dem die weitere Rufnummer zugeordnet ist.

4. Telekommunikationsendgerät (1) nach Anspruch 1, 2 oder 3, dadurch gekennzeichnet, daß zumindest eine im Speicher (20) ablegbare Rufnummer an der Eingabevorrichtung (10) vorgebbar ist.

5. Telekommunikationsendgerät (1) nach einem der vorherigen Ansprüche, dadurch gekennzeichnet, daß zumindest eine Rufnummer, vorzugsweise eine Notrufrufnummer, fest im Speicher (20) abgelegt ist.

6. Telekommunikationsendgerät (1) nach einem der vorherigen Ansprüche, dadurch gekennzeichnet, daß die Sendevorrichtung (5) eine Sendeantenne (35) umfaßt und das Signal in einer vorgegebenen Frequenzlage abstrahlt.

7. Telekommunikationsendgerät (1) nach Anspruch 6, dadurch gekennzeichnet, daß die Sendevorrichtung (5) das Signal wiederholt, vorzugsweise regelmäßig, abstrahlt.

8. Telekommunikationsendgerät (1) nach Anspruch 6 oder 7, dadurch gekennzeichnet, daß die vorgegebene Frequenzlage eine Frequenzlage für Notrufsignale ist.

9. Telekommunikationsendgerät (1) nach Anspruch 6, 7 oder 8, dadurch gekennzeichnet, daß die Sendevorrichtung (5) das Signal in Form von Funkimpulsen abstrahlt.

10. Telekommunikationsendgerät (1) nach einem der Ansprüche 6 bis 9, dadurch gekennzeichnet, daß die Sendevorrichtung (5) das Signal in der vorgegebenen Frequenzlage nur dann abstrahlt, wenn innerhalb einer vierten vorgegebenen Zeit vom Beginn der jeweiligen Signalisierung an keine Telekommunikationsverbindung zu einem Teilnehmer (25) des Telekommunikationsnetzes (30) zustande kommt.

11. Telekommunikationsendgerät (1) nach einem der vorherigen Ansprüche, dadurch gekennzeichnet, daß die erste Zeit und/oder die zweite Zeit und/oder die dritte Zeit und/oder die vierte Zeit an der Eingabevorrichtung (10) vorgebbar sind.
